(19) Europäisches Patentamt
European Patent Office
Office européen des brevets

(11) EP 4 597 708 A1

(12) **EUROPEAN PATENT APPLICATION**
published in accordance with Art. 153(4) EPC

(43) Date of publication:
06.08.2025 Bulletin 2025/32

(21) Application number: 23870542.0

(22) Date of filing: 20.09.2023

(51) International Patent Classification (IPC):
H01M 50/244 (2021.01)    H01M 50/258 (2021.01)
H01M 50/236 (2021.01)    H01M 50/209 (2021.01)
H01M 50/289 (2021.01)    H01M 50/588 (2021.01)
H01M 50/59 (2021.01)    H01M 50/249 (2021.01)

(52) Cooperative Patent Classification (CPC):
H01M 50/209; H01M 50/236; H01M 50/244;
H01M 50/249; H01M 50/258; H01M 50/289;
H01M 50/588; H01M 50/59; Y02E 60/10

(86) International application number:
PCT/CN2023/120168

(87) International publication number:
WO 2024/067310 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.09.2022 CN 202222622368 U

(71) Applicant: Contemporary Amperex Technology
(Hong Kong) Limited
Central (HK)

(72) Inventors:
• FENG, Jingjie
Ningde, Fujian 352100 (CN)

• LI, Zhenhua
Ningde, Fujian 352100 (CN)
• LI, Xing
Ningde, Fujian 352100 (CN)
• ZHANG, Chenchen
Ningde, Fujian 352100 (CN)
• WANG, Pu
Ningde, Fujian 352100 (CN)
• TANG, Yu
Ningde, Fujian 352100 (CN)
• XU, Chenyi
Ningde, Fujian 352100 (CN)

(74) Representative: Ziebig Hengelhaupt Intellectual
Property Attorneys
Patentanwaltskanzlei PartGmbB
Leipziger Straße 49
10117 Berlin (DE)

(54) **BATTERY AND ELECTRIC DEVICE**

(57) A battery (1000) and an electrical device (2000) are disclosed. The battery (1000) includes: a plurality of structural components (10), where the plurality of structural components (10) are arranged along a first direction (F1), at least one structural component (10) is a battery row (20), the battery row (20) includes at least one battery cell (21), the battery cell (21) includes a first surface (211), and the first surface (211) is provided with an electrical connection portion (22) and the first surface (211) is oriented toward an adjacent structural component (10); and a support piece (40), where the support piece (40) is disposed between the battery row (20) and the adjacent structural component (10) and is configured to space the first surface (211) and the adjacent structural component (10) apart by a fixed clearance.

FIG. 3

## Description

### CROSS-REFERENCE TO RELATED APPLICATIONS

This application claims priority to Chinese Patent Application No. 202222622368.4, filed by Contemporary Amperex Technology Co. Ltd. on September 30, 2022, which is incorporated herein by reference in its entirety.

### TECHNICAL FIELD

This application relates to the technical field of batteries, and in particular, to a battery and an electrical device.

### BACKGROUND

In the related art, the structural strength of a battery is low. When the battery collides or in other circumstances, an electrical connection structure of the battery is prone to be damaged, thereby disrupting the normal use of the battery or even causing thermal runaway in severe cases.

### SUMMARY

Some embodiments of this application provide a battery and an electrical device to improve the overall structural strength and prevent damage to a battery cell and an electrical connection portion.

According to a first aspect, an embodiment of this application provides a battery. The battery includes: a plurality of structural components, where the plurality of structural components are arranged along a first direction, at least one structural component is a battery row, the battery row includes at least one battery cell, the battery cell includes a first surface, and the first surface is provided with an electrical connection portion and the first surface is oriented toward an adjacent structural component; and a support piece, where the support piece is disposed between the battery row and the adjacent structural component and is configured to space the first surface and the adjacent structural component apart by a fixed clearance.

In the above technical solution, the first surface provided with an electrical connection portion is spaced apart from the adjacent structural component by a fixed clearance by the support piece, thereby improving the structural strength of the battery, preventing the electrical connection portion from colliding with the structural component, and improving the stability and service life of the electrical connection portion. In addition, the support piece maintains good insulation between conductive components of the battery, prevents the electrical connection portion from accidentally contacting and short-circuiting with other conductive components, and ensures the safety and reliability of the battery. When the battery disclosed in this embodiment of this application is applied in an electrical device, the power supply system of the electrical device may employ the battery disclosed herein, thereby improving the safety and reliability of the electrical device in use.

In some embodiments, at least one structural component is a beam. The beam is arranged adjacent to the battery row. The beam and the adjacent battery row are interspaced with the support piece. In the above technical solution, the overall structural strength is higher.

In some embodiments, the beam is flanked with the battery rows on both sides along the first direction. Each battery row and the beam are interspaced with the support piece. In the above technical solution, each beam can support and constrain two battery rows, thereby simplifying the structure.

In some embodiments, at least two structural components are the battery rows arranged adjacent to each other. The two adjacent battery rows are interspaced with the support piece. In the above technical solution, an intermediate support structure can be omitted, and the two battery rows can be constrained directly, thereby making the structure simpler and more compact.

In some embodiments, the battery cell further includes a second surface spaced apart from the first surface along the first direction. The first surfaces of the two adjacent battery rows are opposite to each other, or, the first surface of one of the battery rows is opposite to the second surface of an adjacent battery row. In the above technical solution, the electrical connection portions being opposite to each other can share a heat dissipation clearance and an electrical connection clearance; and the electrical connection portions being positioned on the same side can avoid an internal short circuit and facilitate battery arrangement.

In some embodiments, the support piece includes a first support platform and a second support platform. The first support platform is disposed on the first surface, the second support platform is disposed on the structural component adjacent to the first surface, and the first support platform abuts the second support platform. In the above technical solution, the processing of the support structure on the structural component can unify in specifications and reduce the processing difficulty.

In some embodiments, the support piece includes a support platform. The support platform is disposed on one of the first surface or the adjacent structural component, and abuts the other of the first surface or the adjacent structural component. In the above technical solution, the difficulty of assembling can be reduced, and the support platform on the opposite side can be prevented from being misaligned and affecting the support stability.

In some embodiments, the support piece includes a filling adhesive applied between the battery row and the adjacent structural component. In the above technical solution, the adhesive can also implement connection between the battery row and the adjacent structural component to increase the structural strength.

In some embodiments, the battery cell includes a first end wall oriented toward the adjacent structural component. An outer surface of the first end wall forms the first surface. The support piece is formed in one piece with the first end wall or the support piece is formed in one piece with the structural component. In the above technical solution, the mounting steps are reduced, and the assembling is facilitated.

In some embodiments, the battery cell includes a first end wall oriented toward the adjacent structural component. An outer surface of the first end wall forms the first surface. The support piece is assembled to the first end wall or the support piece is assembled to the structural component. In the above technical solution, the support piece can be manufactured separately and molded conveniently.

In some embodiments, the battery cell includes a housing and an end cap disposed on the housing. The support piece is disposed on the housing or the end cap. In the above technical solution, the electrical connection portion is disposed on the housing or the end cap, thereby meeting different application requirements.

In some embodiments, a plurality of the support pieces are disposed on each first surface correspondingly. The plurality of the support pieces are disposed around the electrical connection portion, and two adjacent support pieces are spaced apart by a preset clearance. In the above technical solution, the support piece is prevented from interfering with the electrical connection structure, and achieves high support stability.

In some embodiments, the first surface includes four corners. The support piece is disposed at each of the four corners. In the above technical solution, the support is more stable.

In some embodiments, the battery further includes a busbar; in a direction parallel to the first surface. The busbar is located between the two adjacent support pieces and connects the electrical connection portions of two adjacent battery cells. In the above technical solution, the support piece is prevented from interfering with the arrangement of the busbars.

In some embodiments, the electrical connection portion includes a first electrode post and a second electrode post. The support piece is disposed between the first electrode post and the second electrode post. In the above technical solution, an effect of stable support is achieved by using few support pieces, and the support effect near the electrical connection portion is even better.

In some embodiments, at least one end of the support piece extends to an edge of the first surface in a direction perpendicular to an arrangement direction of the first electrode post and the second electrode post. In the above technical solution, the support area of the support piece is increased, thereby improving support stability.

In some embodiments, the battery row includes a plurality of battery layers stacked along a second direction. Each battery layer includes a plurality of battery cells arranged along a third direction. The first direction, the second direction, and the third direction are perpendicular to each other. The battery further includes a plurality of busbars. The battery cells of two adjacent battery layers are connected by a busbar extending along the second direction, and two adjacent battery cells of the same battery layer are connected by a busbar extending along the third direction. In the above technical solution, interference between the busbars and the middle support piece is avoided.

In some embodiments, in the first direction, the first surfaces of two adjacent battery rows are opposite to each other. A distance between the two opposite first surfaces is $H_1$, and a height of the electrical connection portion is $H_2$, satisfying: $2H_2 + 3\ mm \leq H_1$. In the above technical solution, the oppositely positioned electrical connection portions are spaced apart by a sufficient clearance, so that the heat dissipation space is sufficient. Even if the support piece is slightly deformed in a case of collision, the deformation of the support piece will not directly cause deformation of the electrical connection portion. In addition, this arrangement provides a sufficient mounting space for the busbar.

In some embodiments, in a direction parallel to the first surface, a distance between the support piece and the electrical connection portion is L, and a length of the first surface is M, satisfying: $5\ mm \leq L \leq 2/3M$. In the above technical solution, an excessively long distance between the support piece and the electrical connection portion is avoided, and the risk of sparking caused by expansion and bulging during thermal runaway is reduced, where the excessively long distance will result in weak support near the electrical connection portion.

In some embodiments, an area of the first surface is $S_1$, each first surface is connected to n support pieces, and a cross-sectional area of each support piece in a cross-section perpendicular to the first direction is $S_2$,

$$\frac{S_1}{25} \leq nS_2 \leq \frac{4S_1}{5}$$

satisfying: . In the above technical solution, the support area is large enough to ensure a sufficient supporting force.

In some embodiments, a distance between the first surface and the adjacent structural component is $H_1$, an area of the first surface is $S_1$, each first surface is connected to n support pieces, a cross-sectional area of each support piece in a cross-section perpendicular to the first direction is $S_2$, and a length of the first surface is

$$\frac{2H_1 \times S_1}{15M} \leq nS_2 \leq \frac{4S_1}{5}$$

M, satisfying: . In the above

technical solution, the support area is large enough to ensure a sufficient supporting force.

In some embodiments, each first surface is connected to n support pieces. A maximum dimension of each support piece in a direction parallel to the first surface is D, a length of the first surface is M, and a width of the first surface is N, satisfying:

$$\frac{N}{20} \le D \le N$$

;

$$\frac{M}{40} \le D \le M$$

and/or . In the above technical solution, the support area is large enough to ensure a sufficient supporting force.

In some embodiments, the battery row includes at least one battery layer stacked along a second direction. Each battery layer includes at least one battery cell arranged along a third direction. The first direction, the second direction, and the third direction are perpendicular to each other. A dimension of the battery cell along the second direction is less than a dimension of the battery cell along the first direction and less than a dimension of the battery cell along the third direction; or, a dimension of the battery cell along the third direction is less than a dimension of the battery cell along the second direction, and the dimension of the battery cell along the second direction is less than a dimension of the battery cell along the first direction. In the above technical solution, the overall height of the battery can be reduced.

In some embodiments, the battery cell is further provided with a pressure relief portion. The pressure relief portion and the electrical connection portion are positioned on different sides of the battery cell. In the above technical solution, the electrical connection is convenient, and thermal runaway poses little impact on the electrical connection portion.

In some embodiments, the battery cell includes a second surface spaced apart from the first surface along the first direction. The pressure relief portion is disposed on the second surface. In the above technical solution, the distance between electricity and gas is the farthest, and the distance between the electrical connection region and the exhaust region is the farthest, thereby further reducing the probability of being affected.

In some embodiments, the battery cell includes a peripheral surface connected to the first surface. The pressure relief portion is disposed on the peripheral surface. In the above technical solution, a specified distance is maintained between electricity and gas to improve safety.

According to a second aspect, an embodiment of this application further provides an electrical device. The electrical device includes the battery disclosed above. The battery is configured to provide electrical energy for the electrical device.

## BRIEF DESCRIPTION OF DRAWINGS

FIG. 1 is a schematic diagram of an electrical device in the related art;
FIG. 2 is a schematic diagram of a battery in the related art;
FIG. 3 is a schematic diagram of assembling of two oppositely disposed battery cells in a battery according to some embodiments of this application;
FIG. 4 is a schematic diagram of a battery row according to some embodiments of this application;
FIG. 5 is a schematic diagram of a battery row according to some embodiments of this application;
FIG. 6 is a schematic diagram of a battery according to some embodiments of this application;
FIG. 7 is a schematic diagram of the battery shown in FIG. 6 and observed from another viewing angle;
FIG. 8 is a schematic diagram of a battery cell shown in FIG. 6; and
FIG. 9 is a schematic diagram of a vehicle according to some embodiments of this application.

List of reference numerals:

battery 1000; electrical device 2000;
structural component 10;
battery row 20; battery cell 21; first surface 211; second surface 212; housing 214; end cap 215; electrical connection portion 22; first electrode post 221; second electrode post 222; battery layer 23; busbar 24; pressure relief portion 25;
beam 30;
support piece 40; first support platform 41; second support platform 42; support platform 43;
first direction F1; second direction F2; third direction F3.

## DETAILED DESCRIPTION OF EMBODIMENTS

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application. All other embodiments derived by a person of ordinary skill in the art based on the embodiments of this application without making any creative efforts still fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

In some embodiments of this application, the same reference numeral denotes the same component. For brevity, detailed descriptions of the same component are omitted in a different embodiment. Understandably, dimensions such as thickness, length, and width of various components in some embodiments of this application shown in the drawings, and dimensions such as overall thickness, length, and width of an integrated device are merely illustrative descriptions, but do not constitute any limitation on this application.

"A plurality of" referred to in this application means two or more (including two).

In this application, the battery means a unitary physical module that includes one or more battery cells to provide a higher voltage and a higher capacity. For example, the battery referred to herein may include a battery module, a battery pack, or the like. Some batteries each may include a box configured to package one or more battery cells or a plurality of battery modules. The box prevents liquid or other foreign matters from affecting the charging or discharging of the battery cells. Definitely, some types of batteries may include no box and are directly disposed in a battery compartment of the electrical device.

In this application, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as cylindrical, flat, cuboidal or other shapes. The shape of the battery cell is not limited herein. In terms of the packaging form, the battery cell is typically classed into three types: cylindrical battery cell, prismatic battery cell, and pouch-type battery cell. The type of the battery cell is not limited herein.

For example, a battery cell may include a shell, an electrode assembly, and an electrolyte solution. The shell is configured to accommodate the electrode assembly and the electrolyte solution. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part, uncoated with the positive active material layer, of the positive current collector, serves as a positive tab. Using a lithium-ion battery as an example, the positive current collector may be made of aluminum, and a positive active material may be lithium cobalt oxide, lithium iron phosphate, ternary lithium, lithium manganese oxide, or the like.

The negative electrode plate includes a negative current collector and a negative active material layer. A surface of the negative current collector is coated with the negative active material layer. Of the negative current collector, a part uncoated with the negative active material layer protrudes from a part coated with the negative active material layer, and the part uncoated with the negative active material layer serves as a negative tab. The negative current collector may be made of copper, and a negative active material may be carbon, silicon, or the like. To prevent a large electrical current from tripping the circuit, a plurality of positive tabs are stacked together, and a plurality of negative tabs are stacked together.

The separator may be made of a material such as PP (polypropylene, polypropylene) or PE (polyethylene, polyethylene). In addition, the electrode assembly may be of a jelly-roll type structure or a stacked type structure, without being limited herein.

On the battery cell, an electrode post or the like may be disposed and connected to a tab, and may serve as an electrical connection portion of the battery cell. In addition, a pressure relief portion may be disposed on the battery cell. When the internal pressure of the battery cell is excessively high (for example, in a case of thermal runaway), the pressure relief portion is configured to release the internal substances (for example, gas, liquid, and particulate matters) of the battery cell to reduce the internal pressure of the battery cell and prevent the battery cell from being pressurized much quickly inside. The quick pressurization may lead to danger and accidents such as explosion of the battery cell. For example, the pressure relief portion may be an explosion-proof valve, a burst disc, or the like.

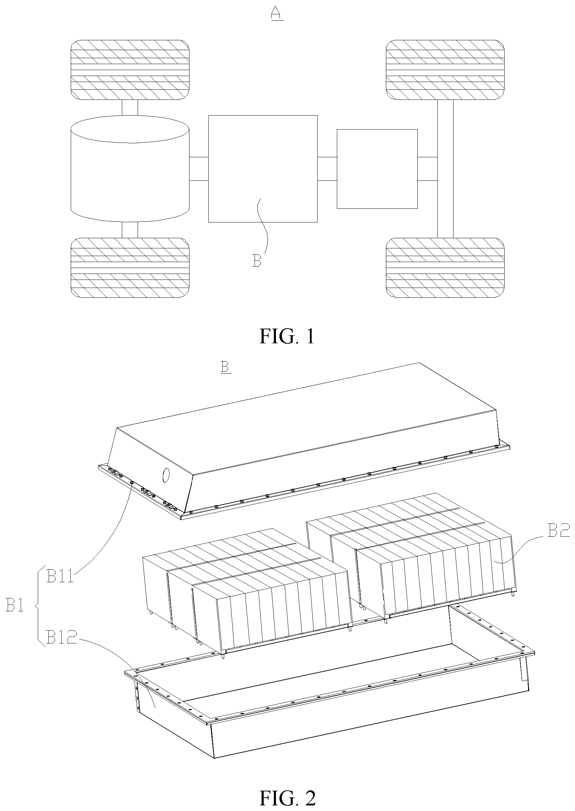

For example, as shown in FIG. 1 and FIG. 2, in some electrical devices A, a battery B is used for supplying power. The battery B includes a box B1 and a battery cell B2. The box B1 includes an upper housing B 11 and a lower housing B12. In conventional technology, the battery cell is typically fixed to the upper housing B11 or the lower housing B12 by adhesive, the overall structural strength of the battery B is relatively low, and the electrical connection portion on the battery cell is suspended. However, the adhesive fixing method results in deficiency of firmness. Especially, with the increase of the operating time or temperature of the battery B, the adhesive will age or soften, thereby making the battery cell prone to move, especially in a case of collision. Consequently, the distance between the electrical connection portion and the adjacent component is unstable, thereby disrupting the heat dissipation of this region, or reducing the creepage clearance between the electrical connection portions, and resulting in insulation failure phenomena such as high-voltage sparking, or, in severe cases, even damaging the electrical connection portion due to collision with an adjacent component.

An approach to avoiding the problem of damage to the electrical connection portion caused by the movement of the battery cell is to improve the structure of the electrical connection portion so as to increase the structural strength. However, this approach is effective in preventing damage to the electrical connection portion only when the impact is light or the number of impacts is small, but is ineffective in withstanding damage caused by a heavy impact or repeated impacts. In addition, the above approach is unable to solve the problem that the heat dissipation space near the electrical connection portion changes with the movement of the battery cell. In particular, in some batteries, a plurality of battery cells are usually disposed to achieve an appropriate voltage and capacity of the battery, and the plurality of battery cells are arranged in a plurality of rows. When a battery cells move, the heat dissipation space corresponding to the electrical connection portions of some battery cells may increase, and the heat dissipation space corresponding to the electrical connection portions of other battery cells may decrease. The above approach incurs the problem of an inferior heat dissipation effect in local regions.

In view of the above problem, this application discloses a battery 1000. The battery includes a plurality of structural components 10 and a support piece 40. The plurality of structural components 10 are arranged along a first direction F1. At least one structural component 10 is a battery row 20. The battery row 20 includes at least one battery cell 21. The battery cell 21 includes a first surface 211. The first surface 211 is provided with an electrical connection portion 22 and the first surface 211 is oriented toward an adjacent structural component 10. The support piece 40 is disposed between the battery row 20 and the adjacent structural component 10 and is configured to space the first surface 211 and the adjacent structural component 10 apart by a fixed clearance.

In the battery 1000 of the above structure, the support piece 40 supports and constrains the first surface 211 of the battery cell 21 and the adjacent structural component 10, where the first surface is provided with the electrical connection portion 22. In this way, the first surface 211 is spaced apart from the adjacent structural component 10 by a fixed clearance to avoid relative movement between the battery row 20 and the adjacent structural component 10, thereby ensuring that the spatial dimensions of the region provided with the electrical connection portion 22 are fixed, and preventing the electrical connection portion 22 from being damaged by collision with the adjacent structural component 10.

In addition, by disposing the support piece 40, the region in which the electrical connection portion 22 is located can maintain a stable heat dissipation space, thereby ensuring a stable heat dissipation effect and heat dissipation uniformity, and avoiding over-temperature in local regions. In addition, in some embodiments in which two battery rows 20 are adjacent and the first surfaces 211 are opposite to each other, the support piece 40 also ensures a sufficient creepage distance between the conductive components, and avoids contact and short-circuiting between the electrical connection structures of the two battery rows 20.

Moreover, in contrast to fixing the battery cells 21 only by adhesive, constraining the battery cells by use of the support piece 40 is more reliable and less prone to aging or softening. The support piece 40 is of higher mechanical strength and can withstand a greater impact force, thereby greatly prolonging the service life.

The battery 1000 disclosed herein is applicable to, but not limited to use in, electrical devices 2000 such as a vehicle, watercraft, or aircraft. A power supply system of the electrical devices 2000 may be formed by using the battery 1000 disclosed herein or the like, so as to ensure the safety and reliability of the electrical device 2000 in use.

For example, the electrical device 2000 disclosed herein may be, but is not limited to, a vehicle, a mobile phone, a tablet, a laptop computer, a ship, a spacecraft, an electric toy, an electric tool, or the like. The vehicle may be an oil-fueled vehicle, a natural gas vehicle, a new energy vehicle, or a rail vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like.

The following describes a battery 1000 according to an embodiment of this application with reference to drawings.

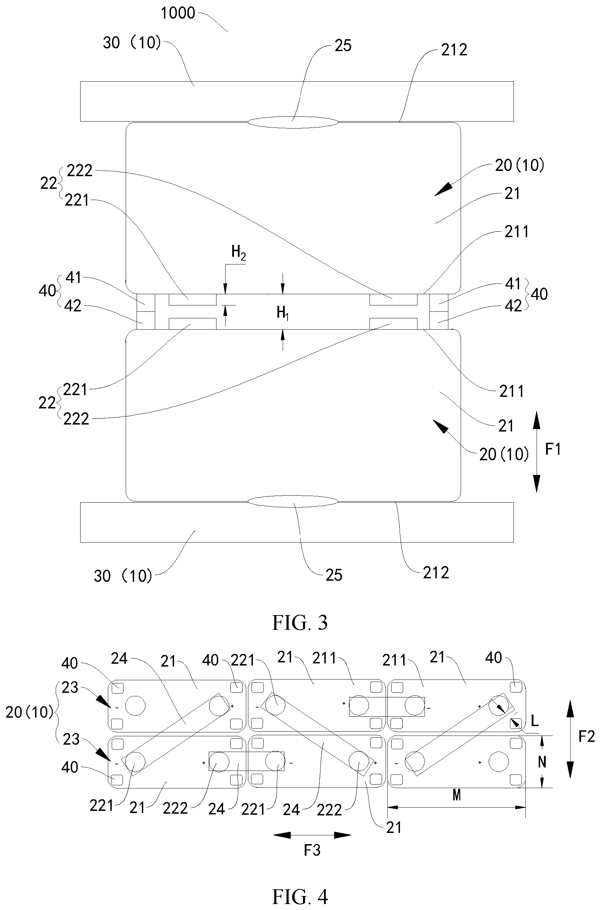

As shown in FIG. 3 to FIG. 7, the battery 1000 includes a plurality of structural components 10 and a support piece 40. The plurality of structural components 10 are arranged along a first direction F1. At least one structural component 10 is a battery row 20. The battery row 20 includes at least one battery cell 21. The battery cell 21 includes a first surface 211. The first surface 211 is provided with an electrical connection portion 22 and the first surface 211 is oriented toward an adjacent structural component 10. The support piece 40 is disposed between the battery row 20 and the adjacent structural component 10 and the support piece 40 is configured to space the first surface 211 and the adjacent structural component 10 apart by a fixed clearance.

The structural component 10 means a component constituting the overall structure of the battery 1000, and in this context, particularly means a component arranged along the first direction F1. For example, the structural component 10 may be a battery row 20, a beam 30, or the like. The beam 30 may be a sidewall of the box of the battery 1000, or may be a partition beam disposed in the box and configured to partition the space in the box.

At least one structural component 10 is a battery row 20. In other words, among a plurality of structural components 10, only one structural component 10 is a battery row 20, or several structural components 10 are battery rows 20, or all the structural components 10 are battery rows 20. In an embodiment in which only one structural component 10 is a battery row 20 or several structural components 10 are battery rows 20, other structural components 10 different from the battery row 20 are not particularly limited herein, and may be a beam 30 or another structure adjacent to the battery row 20.

The battery row 20 includes one or more battery cells 21. In some embodiments in which the battery row includes a plurality of battery cells 21, the plurality of battery cells 21 may be arranged in a direction perpendicular to the first surface 211 so that the plurality of battery cells 21 are located in the same row in the first direction F1.

Each battery cell 21 includes a first surface 211. The first surface 211 is provided with an electrical connection portion 22. It is hereby noted that in an embodiment in which each battery row 20 includes a plurality of battery cells 21, the first surfaces 211 of a plurality of battery cells 21 corresponding to the same battery row 20 may be located on the same side or on different sides in the first direction F1, both falling within the protection scope of this application.

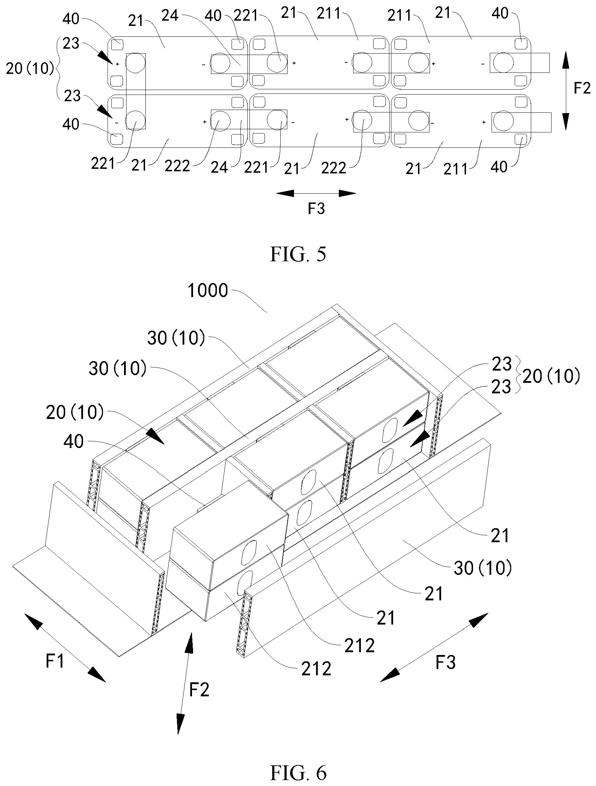

For example, as shown in FIG. 4 and FIG. 5, the battery row 20 includes six battery cells 21. The first surfaces 211 of the six battery cells 21 are located on the same side of the battery cells 21 in the first direction F1. For another example, the battery row 20 includes six battery cells 21, in which the first surfaces 211 of three battery cells 21 are located on one side of the battery cells 21 along the first direction F1, and the first surfaces 211 of the other three battery cells 21 are located on the other side of the battery cells 21 along the first direction F1.

The support piece 40 is a structure that can play a supporting role. The support piece 40 is disposed between the battery row 20 and the adjacent structural component 10 and is configured to space the first surface 211 and the adjacent structural component 10 apart by a fixed clearance. In other words, by virtue of the characteristic that the structure of the support piece occupies a specified space, the support piece 40 is disposed between the battery row 20 and the adjacent structural component 10 to space the first surface 211 apart from the adjacent structural component 10. For example, in some embodiments, one end of the support piece 40 along the first direction F1 abuts the first surface 211, and the other end of the support piece abuts the adjacent structural component 10. In this way, the first surface 211 is spaced apart from the adjacent structural component 10 by a fixed clearance, thereby fixing the relative position between the electrical connection portion 22 disposed on the first surface 211 and the adjacent structural component 10.

The clearance between the first surface 211 and the adjacent structural component 10 is fixed under the action of the support piece 40. Therefore, the support piece 40 can support the first surface 211 and the adjacent structural component 10 in the first direction F1, thereby improving the overall structural strength, and preventing the battery row 20 from moving that causes the electrical connection portion 22 of the first surface 211 to collide with the adjacent structural component 10, and in turn, avoiding damage to the electrical connection structure and improving the structural stability and safety of the electrical connection portion 22.

At the same time, the support piece 40 further implements stability of the spatial distance of the region in which the electrical connection portion 22 is located, ensures sufficient heat dissipation space, and improves the heat dissipation efficiency. In an embodiment in which a conductive component is disposed on the adjacent structural component 10, the support piece also prevents the electrical connection portion 22 from contacting the conductive component on the structural component 10 to cause insulation failure, high-voltage sparking and other problems, and ensures a sufficient creepage clearance between the conductive components in the battery 1000 so as to avoid short-circuiting.

In the battery 1000 according to this embodiment of this application, the first surface 211 provided with an electrical connection portion 22 is spaced apart from the adjacent structural component 10 by a fixed clearance by the support piece 40, thereby improving the structural strength of the battery 1000, preventing the electrical connection portion 22 from colliding with the structural component 10, and improving the stability and service life of the electrical connection portion 22. In addition, the support piece 40 maintains good insulation between conductive components of the battery 1000, prevents the electrical connection portion 22 from accidentally contacting and short-circuiting with other conductive components, and ensures the safety and reliability of the battery 1000. When the battery 1000 disclosed in this embodiment of this application is applied in an electrical device 2000, the power supply system of the electrical device 2000 may employ the battery 1000 disclosed herein, thereby improving the safety and reliability of the electrical device 2000 in use.

In this embodiment of this application, the type of the structural component 10 may be set flexibly based on actual conditions.

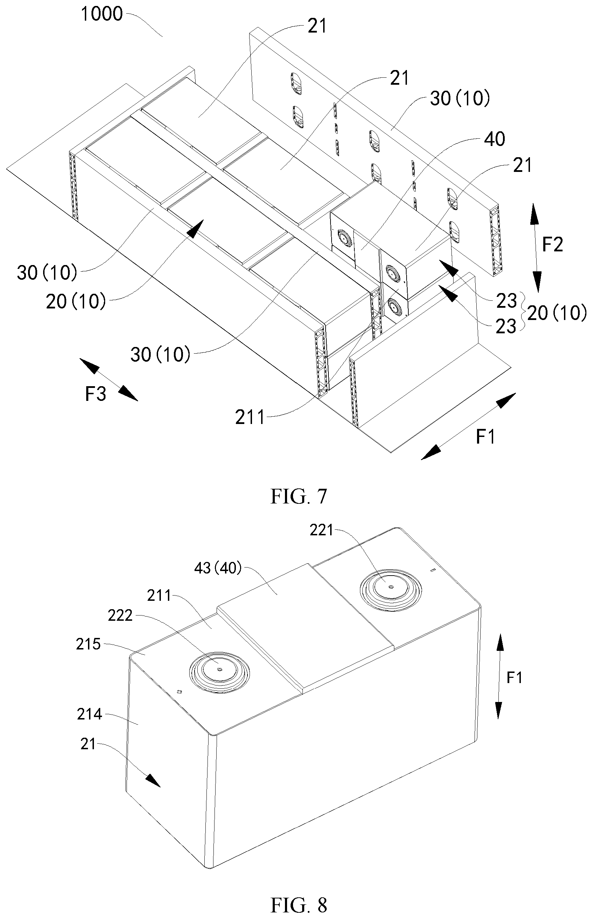

For example, in some embodiments, as shown in FIG. 6 and FIG. 7, at least one structural component 10 may be a beam 30. In addition, the beam 30 is arranged adjacent to the battery row 20. The beam 30 and the adjacent battery row 20 are interspaced with the support piece 40.

In other words, the plurality of structural components 10 may include one beam 30, or may include a plurality of beams 30. At least one of the beams 30 may be arranged adjacent to the battery row 20, and the adjacent beam 30 is supported and constrained against the battery row 20 by the support piece 40. On the one hand, the beam 30 is of high structural strength. The beam 30, the support piece 40, and the battery row 20 form a whole, so that the overall structural strength is higher and the effect is stronger in improving the structural stability and preventing the electrical connection portion 22 from being damaged.

In some embodiments, still referring to FIG. 6 and FIG. 7, the beam 30 may be flanked with the battery rows 20 on both sides along the first direction F1. Each battery row 20 and the beam 30 are interspaced with the support piece 40.

In other words, the beam 30 is adjacent to the two battery rows 20 in the first direction F1, and is supported and constrained against the two adjacent battery rows 20 by the support piece 40. In this way, each beam 30 can combine with the two battery rows 20 through the support piece 40 to form a whole, thereby increasing the structural strength of the two battery rows 20, and making the structure of the battery 1000 simpler. In addition, the beam 30 can serve as a partition beam to partition the two battery rows 20, so as to avoid direct contact and short-circuiting between the conductive structures of the two battery rows 20. The beam 30 can also prevent heat from being quickly transferred to another battery row 20 to cause chain thermal runaway when one of the battery rows 20 is thermally runaway.

In another example, in some embodiments, as shown in FIG. 3 to FIG. 5, at least two structural components 10 are the battery rows 20 arranged adjacent to each other. The two adjacent battery rows 20 are interspaced with the support piece 40.

The battery 1000 includes at least two battery rows 20, so that the voltage and capacity of the battery 1000 are more appropriate. When arranged adjacent to each other along the first direction F1, the two battery rows 20 may also be supported and constrained by the support piece 40. On the one hand, this arrangement avoids short-circuiting between the conductive components of the two battery rows 20, and prevents the two battery rows 20 from colliding that results in structural disruption or damage to the electrical connection portion 22. On the other hand, the two battery rows 20 being directly adjacent to each other can omit the structures such as the partition beam, thereby making the arrangement more compact and the structure simpler. Moreover, the support and constraint function of the support piece 40 ensures a good insulation effect.

In addition, the battery cell 21 further includes a second surface 212 spaced apart from the first surface 211 along the first direction F1. In other words, the surfaces of the battery cell 21 on two sides along the first direction F1 are a first surface 211 and a second surface 212, respectively. If the first surface 211 of the battery cell 21 faces left, the second surface 212 faces right. The first surfaces 211 of the two adjacent battery rows 20 are opposite to each other, or, the first surface 211 of one of the battery rows 20 is opposite to the second surface 212 of an adjacent battery row 20.

In an embodiment in which the first surfaces 211 of two adjacent battery rows 20 are opposite to each other, as shown in FIG. 3, the electrical connection portions 22 of the two battery rows 20 are arranged opposite to each other. In this way, the electrical connection portions 22 of the two battery rows 20 can share the heat dissipation clearance and the electrical connection clearance between the two battery rows 20. In other words, the heat dissipated by the electrical connection portions 22 of both battery rows 20 can be dissipated out through the space between the two battery rows 20, and the components (such as busbar 24) used for implementing electrical connection of a plurality of electrical connection portions 22 can all be disposed in the space between the two battery rows 20, thereby facilitating adjustment of the spatial position of the components for electrical connection, making the arrangement of the two battery rows 20 more compact, and in turn, making the overall structure of the battery 1000 more compact.

For example, in some embodiments, as shown in FIG. 4 and FIG. 5, a plurality of battery cells 21 of the battery row 20 may be electrically connected to the electrical connection portion 22 by the busbar 24, so as to implement series or parallel connection of the plurality of battery cells 21, or to implement series or parallel connection between adjacent battery rows 20. The busbars 24 connected to the two battery rows 20 can all be positioned in the space between the two first surfaces 211 disposed opposite to each other. In addition, the plurality of busbars 24 are staggered from each other to avoid short circuits and make the structure more compact.

For example, in some other embodiments, the electrical connection portions 22 of adjacent battery rows 20 may be supported against each other, or may be electrically connected by the same busbar 24, so as to implement parallel connection between two adjacent battery rows 20. In addition, the above assembling structure of the electrical connection portion 22 can further increase the structural strength of the electrical connection portion 22, and is more effective in preventing the electrical connection portion 22 and the battery cell 21 from being structurally disrupted.

In an embodiment in which the first surface 211 of one battery row 20 is opposite to the second surface 212 of an adjacent battery row 20, the electrical connection portions 22 of the two battery rows 20 are disposed on the same side, for example, both disposed on the left side of the battery row 20. In this case, the electrical connection portions 22 can be partitioned by the structure of the battery cell 21 itself, and the effect is stronger in preventing the electrical connection portions 22 of the two battery rows 20 from short-circuiting.

It is hereby noted that supporting against a component may be supporting against the component directly or indirectly, and may constitute an electrical connection or insulation. When an electrical connection is constituted, the electrical connection may be parallel or series connection, without being limited herein.

In this embodiment of this application, the structure of the support piece 40 and the mounting structure may be disposed flexibly based on actual conditions. For example, the support piece 40 may be disposed on only one of the structural components 10, or may be disposed on two adjacent structural components 10 at the same time.

For example, in some embodiments, as shown in FIG. 3 to FIG. 5, the support piece 40 may include a first support platform 41 and a second support platform 42. The first support platform 41 is disposed on the first surface 211. The second support platform 42 is disposed on the structural component 10 adjacent to the first surface 211. The first support platform 41 abuts the second support platform 42. In this way, support can be implemented by the first support platform 41 and the second support platform 42, thereby increasing the structural strength and implementing the insulation at the required position of the battery row 20 easily. Moreover, the battery row 20 and the adjacent structural component 10 (beam 30 or battery row 20, or the like) are both provided with a support structure. The support structure does not need to be designed differently for different structural components 10 during manufacturing. For example, in an embodiment in which two battery cells 21 are positioned opposite to each other, both battery cells 21 are provided with a support structure, so that the battery cells 21 can be processed based on unified specifications, thereby simplifying the processing procedure and improving the production efficiency.

For example, in some embodiments, as shown in FIG. 6 to FIG. 8, the support piece 40 includes a support platform 43. The support platform 43 is disposed on one of the first surface 211 or the adjacent structural component 10, and the support platform 43 abuts the other of the first surface 211 or the adjacent structural component 10. In other words, of the two structural components 10 supported against and by the support piece 40, only one is provided with a support platform 43. This support platform 43 supports the structural component 10 on the opposite side. In this way, the difficulty of assembling can be reduced, and the support platform 43 on the opposite side can be prevented from being misaligned and resulting in problems such as support instability.

For example, in some embodiments, the support piece 40 may include a filling adhesive applied between the battery row 20 and the adjacent structural component 10. That is, two adjacent structural components 10 may be fixed and supported by adhesive instead, thereby increasing the structural strength and simplifying the processing of the battery cell 21. It is worth noting that the support piece 40 may further include a support platform 43 (or a first support platform 41 and a second support platform 42), a filling adhesive, and the like, so as to further increase the structural strength.

It is hereby noted that the processing method of the support piece 40 is not limited.

In some embodiments, the battery cell 21 includes a first end wall oriented toward the adjacent structural component 10. The outer surface of the first end wall (that is, the surface oriented toward the adjacent structural component 10) forms a first surface 211. The support piece 40 may be formed in one piece with the first end wall, or the support piece 40 may be formed in one piece with the structural component 10. This reduces the mounting steps and facilitates assembling.

In some other embodiments, the battery cell 21 includes a first end wall oriented toward the adjacent structural component 10. The outer surface of the first end wall forms a first surface 211. The support piece 40 may be assembled to the first end wall, or, the support piece 40 may be assembled to the structural component 10. In other words, the support piece 40 and the first end wall may discrete structures, the support piece 40 and the structural component 10 may be discrete components, and the support piece 40 is assembled to the first end wall or the structural component 10, so that the support piece 40 can be assembled and arranged together with the battery row 20 or the structural component 10. During manufacturing, the support piece 40 may be manufactured separately and molded conveniently. Here, the assembling method of the support piece 40 includes, but is not limited to, welding, gluing, and the like.

In some embodiments, as shown in FIG. 8, the battery cell 21 may include a housing 214 and an end cap 215 disposed on the housing 214. The support piece 40 may be disposed on the housing 214 or the end cap 215. In this way, the electrical connection portion 22 may be disposed on the end cap 215 or the housing 214, thereby making the structural design more flexible.

For example, in some specific embodiments, the support piece 40 is formed in one piece with the end cap 215. During the injection molding of the end cap 215, the support piece 40 can be formed by injection molding at one time, thereby greatly simplifying the processing steps and improving the production efficiency.

In some embodiments of this application, as shown in FIG. 3 to FIG. 5, a plurality of the support pieces 40 are disposed on each first surface 211 correspondingly. The plurality of the support pieces 40 are disposed around the electrical connection portion 22, and two adjacent support pieces 40 are spaced apart by a preset clearance. In other words, the support pieces 40 disposed on the same first surface 211 are arranged in a scattered manner, rather than one support piece 40 forming a ring structure along the entire circumference of the first surface 211. In this way, space can be reserved for convenient electrical connection and wiring. In addition, the circumferentially spaced support pieces ensure support stability and structural reliability.

In some specific embodiments, as shown in FIG. 4 and FIG. 5, the first surface 211 includes four corners. For example, the first surface 211 is substantially a rectangular surface, and forms a relatively regular structure. The support piece 40 is disposed at each of the four corners. In this way, the support piece 40 can support and constrain the battery cell 21 from four angles. The force borne by the battery cell 21 on the whole is more uniform, and the structure is more stable. In addition, the support pieces 40 are close to the edge position, so that the corners are less prone to interfere with the electrical connection structure.

Definitely, the positions of the support pieces 40 include, but are not limited to, the corners of the first surface 211. For example, the support piece 40 may be disposed at positions such as the middle of the long edge of the first surface 211, as long as the interference between the electrical connection portion 22 and the electrical connection structure (such as the busbar 24) is avoided.

In some embodiments in which a plurality of support pieces 40 are disposed on the first surface 211, as shown in FIG. 4 and FIG. 5, the battery 1000 may further include a busbar 24. The busbar 24 may be configured to connect the electrical connection portions 22 of two adjacent battery cells 21. In other words, two adjacent battery cells 21 are electrically connected by the busbar 24 in series or in parallel or the like, thereby reducing the difficulty of the process.

In addition, in a direction parallel to the first surface 211, the busbar 24 is located between two adjacent support pieces 40. In this way, the projections of the busbar 24 and the support pieces 40 on the first surface 211 along the first direction F1 do not overlap at all, and the busbar 24 is completely staggered from the support pieces 40 to avoid positional interference.

It is hereby noted that, in the above embodiment, the extension direction of the busbar 24 may be set flexibly, as long as the series or parallel connection is implemented and the busbar 24 is spaced apart from the support pieces 40.

In some embodiments of this application, as shown in FIG. 6 to FIG. 8, the electrical connection portion 22 includes a first electrode post 221 and a second electrode post 222. Of the first electrode post 221 and the second electrode post 222, one may be a positive electrode post, and the other may be a negative electrode post. In this way, the battery cell 21 can be connected in series or parallel to other battery cells 21 by the positive electrode post and the negative electrode post.

In addition, the support piece 40 may be disposed between the first electrode post 221 and the second electrode post 222. In this way, a good effect of supporting and constraint is achieved by just a small number of support pieces 40, thereby ensuring overall structural stability and simplifying the structure. Moreover, the support piece 40 is disposed between the first electrode post 221 and the second electrode post 222, thereby reducing the distance between the support piece 40 and the electrode post, avoiding a weak supporting force near the electrode post due to a long distance between the support piece 40 and the electrode post, and effectively reducing the risk of sparking caused by the expansion or bulging of the first surface 211 during thermal runaway.

Further, as shown in FIG. 6 to FIG. 8, at least one end of the support piece 40 extends to an edge of the first surface 211 in a direction perpendicular to an arrangement direction of the first electrode post 221 and the second electrode post 222. For example, the first electrode post 221 and the second electrode post 222 may be arranged along a third direction F3, and at least one end of the support piece 40 along the second direction F2 extends to the edge of the first surface 211. The first direction F1, the second direction F2, and the third direction F3 are perpendicular to each other. In this way, the support area of the support piece 40 is increased, and the support effect and structural strength are improved.

In some embodiments of this application, as shown in FIG. 4 to FIG. 7, the battery row 20 includes a plurality of battery layers 23 stacked along the second direction F2. Each battery layer 23 includes a plurality of battery cells 21 arranged along the third direction F3. The first direction F1, the second direction F2, and the third direction F3 are perpendicular to each other. By adjusting the number of battery layers 23 and the number of battery cells 21 included in a battery layer 23, the dimensions of the battery 1000 can be more flexibly designed in a three-dimensional space, so as to meet different spatial arrangement requirements, mounting space requirements, capacitance requirements, and the like.

In some embodiments in which the electrical connection portions 22 are electrically connected by the busbar 24 and the support piece 40 is disposed between the first electrode post 221 and the second electrode post 222, the busbar 24 may be laid in a wiring manner shown in FIG. 5. To be specific, the battery cells 21 of two adjacent battery layers 23 are connected by a busbar 24 extending along the second direction F2, and two adjacent battery cells 21 of the same battery layer 23 are connected by a busbar 24 extending along the third direction F3. This makes each busbar 24 bypass the region between the first electrode post 221 and the second electrode post 222 on the same first surface 211, thereby avoiding structural interference with the support piece 40. In addition, the two busbars 24 connected to the first electrode post 221 and the second electrode post 222 respectively on the same battery cell 21 can be partitioned by the support piece 40, thereby improving the insulation effect and reducing the risk of short-circuiting or sparking.

In some embodiments, as shown in FIG. 4 and FIG. 5, a plurality of battery cells 21 of each battery row 20 may be electrically connected inside the battery row 20 and then led out as a whole. In other words, adjacent battery rows 20 are not connected to each other, thereby simplifying the electrical connection.

In some other embodiments, adjacent battery rows 20 may be electrically connected to each other, for example, by a busbar 24, thereby reducing the difficulty of the process; or adjacent battery rows may be directly butt-welded together through the electrical connection portions 22 positioned opposite to each other, thereby improving the compactness of the structure and optimizing space utilization.

According to some embodiments of this application, as shown in FIG. 3, in the first direction F1, the first surfaces 211 of two adjacent battery rows 20 are opposite to each other. A distance between the two opposite first surfaces 211 is $H_1$, and a height of the electrical connection portion 22 is $H_2$, satisfying: $2H_2 + 3\,\text{mm} \leq H_1$.

The distance between the two opposite first surfaces 211 is the dimension of the support piece 40 along the first direction F1. The two ends of the support piece 40 abut the two first surfaces 211 respectively, so that the two first surfaces 211 are spaced apart by a fixed clearance $H_1$. That is, the two battery rows 20 are spaced apart by a fixed clearance. The height of the electrical connection portion 22 is the dimension of a part of the electrical connection portion 22 along the first direction F1, the part being located outside the first surface 211.

By satisfying $2H_2 + 3\,\text{mm} \leq H_1$, after the support piece 40 supports and constrains the two first surfaces 211, the electrical connection portions 22 on the two first surfaces 211 are spaced apart by a specified clearance, thereby facilitating electrical connection and wiring, and providing sufficient space for heat dissipation. In addition, even if the support piece 40 is slightly deformed in a case of collision, the deformation of the support piece will not directly cause deformation of the electrical connection portion 22, thereby more favorably ensuring stability of the electrical connection structure.

It is hereby noted that in an embodiment in which the first surface 211 of the battery row 20 is adjacent to the beam 30, the distance between the first surface 211 and the beam 30 is $H_1$, and the height of the electrical connection portion 22 is $H_2$, satisfying: $H_2 + 1.5\,\text{mm} \leq H_1$. This provides wiring space and heat dissipation space for the electrical connection portion 22 of the battery row 20 while preventing the electrical connection structure from being damaged when the support piece 40 is slightly deformed.

In some embodiments of this application, as shown in FIG. 3 to FIG. 5, in a direction parallel to the first surface 211, the distance between the support piece 40 and the electrical connection portion 22 is L, and the length of the first surface 211 is M, satisfying: $5\,\text{mm} \leq L \leq 213M$.

Here, the distance between the support piece 40 and the electrical connection portion 22 is a shortest distance between the support piece and the electrical connection portion. The length of the first surface 211 means a distance between two edges of the first surface 211, the two edges being the longest apart from each other. For example, as shown in FIG. 4, the first surface 211 is substantially a rectangle, and the length of the rectangle is the length M of the first surface 211.

By satisfying $5\,\text{mm} \leq L \leq 2/3M$, it is avoided that the distance between the support piece 40 and the electrical connection portion 22 is deficient and causes interference between the support piece and the electrical connection portion or causes the support piece 40 to interfere with the electrical connection of the electrical connection portion 22; and, it is also avoided that the distance between the support piece 40 and the electrical connection portion 22 is excessively long and results in a weak supporting force near the electrical connection portion 22. This setting effectively reduces the risk of sparking caused by the expansion or bulging at the electrical connection point on the first surface 211 during thermal runaway.

In some embodiments of this application, as shown in FIG. 3 to FIG. 5, an area of the first surface 211 is $S_1$, each first surface 211 is connected to n support pieces 40. A cross-sectional area of each support piece 40 in a cross-section perpendicular to the first direction

$$\frac{S_1}{25} \le nS_2 \le \frac{4S_1}{5}$$

F1 is $S_2$, satisfying:                        , where n is an integer greater than or equal to 1.

If the sum of the areas of the n support pieces 40 is excessively small, the supporting force will be insufficient; if the sum of the areas is excessively large, a waste of material is caused and the clearance between the support piece 40 and other structures such as the electrical connection portion 22 is prone to be excessively small. By controlling the parameter values to fall within the above range, the support piece 40 can provide stable support for two adjacent structural components 10 and effectively increase the overall structural strength, and additionally, can make a sufficient clearance between the support piece 40 and the electrical connection portion 22, so as to avoid structural interference and avoid affecting the wiring.

In some embodiments of this application, as shown in FIG. 3 to FIG. 5, the distance between the first surface 211 and the adjacent structural component 10 is $H_1$, the area of the first surface 211 is $S_1$, each first surface 211 is connected to n support pieces 40, the cross-sectional area of each support piece 40 in a cross-section perpendicular to the first direction F1 is $S_2$, and the length of the first surface 211 is M, satisfying:

$$\frac{2H_1 \times S_1}{15M} \le nS_2 \le \frac{4S_1}{5}$$
.

In order to ensure the support stability, the greater the $H_1/M$ ratio, the larger the required area of the support piece 40. The greater the value of $S_1$, the larger the required area of the support piece 40. By satisfying

$$\frac{2H_1 \times S_1}{15M} \le nS_2 \le \frac{4S_1}{5}$$
, the n support pieces 40 can provide stable support for the battery row 20 and the adjacent structural component 10, and avoid an excessively large area of the support pieces 40 that results in an excessively small clearance between the support piece and the electrical connection portion 22, thereby avoiding structural interference and facilitating electrical connection and wiring.

In some embodiments of this application, as shown in FIG. 3 to FIG. 5, each first surface 211 is connected to n support pieces 40. The maximum dimension of each support piece 40 in a direction parallel to the first surface 211 is D, the length of the first surface 211 is M, and the width of the first surface is N, satisfying:

$$\frac{N}{20} \le D \le N \qquad \frac{M}{40} \le D \le M$$
; and/or                        .

The maximum dimension of the support piece 40 in a direction parallel to the first surface 211 means a maximum dimension of the support piece 40 in a direction perpendicular to the first direction F1 on a cross-section perpendicular to the first direction F1. For example, when the cross-section of the support piece 40 is a circle, the maximum dimension D is the diameter of the circle. When the cross-section of the support piece 40 is square, the maximum dimension D is a diagonal length of the square. Definitely, the shape of the support piece 40 includes, but is not limited to, a circle or a square, and may be other shapes such as a triangle or a strip shape.

The length of the first surface 211 means a distance between two edges of the first surface 211, the two edges being the longest apart from each other. The width of the first surface 211 means a dimension of the first surface 211 in a direction perpendicular to the length direction. For example, as shown in FIG. 4, the first surface 211 is substantially a rectangle. The length of the rectangle is the length M of the first surface 211, and the width of the rectangle is the width N of the first surface 211.

$$\frac{N}{20} \le D \le N$$

In some embodiments,                        ; in

$$\frac{M}{40} \le D \le M$$
some other embodiments,                        ; in still

$$\frac{N}{20} \le D \le N$$
some other embodiments,                        and

$$\frac{M}{40} \le D \le M$$
. Within the parameter values falling within the above range, the dimension of the support piece 40 can be made large enough to ensure sufficient support stability while preventing the size of the support piece 40 from being excessively large and interfering with the wiring between adjacent battery cells 21.

According to some embodiments of this application, as shown in FIG. 3 to FIG. 7, the battery row 20 includes at least one battery layer 23 stacked along the second direction F2. Each battery layer 23 includes at least one battery cell 21 arranged along the third direction F3. The first direction F1, the second direction F2, and the third direction F3 are perpendicular to each other. This allows a plurality of battery cells 21 to be arranged in a battery row 20, so as to meet the dimension requirements and the capacitance requirements of different batteries 1000.

In some embodiments, the dimension of the battery cell 21 along the second direction F2 is less than the dimension of the battery cell along the first direction F1, and the dimension of the battery cell 21 along the second direction F2 is less than the dimension of the battery cell along the third direction F3.

In other words, the battery layers 23 are stacked along the thickness direction of the battery cell 21. The dimension of the battery cell 21 along the first direction F1 may be greater than, equal to, or less than the dimension of the battery cell along the third direction F3. Understandably, the thickness of the battery cell 21 is less than the length of the battery cell 21, the thickness of the battery cell 21 is less than the width of the battery cell 21, and the length of the battery cell 21 is greater than the width of the battery cell 21. The battery layers 23 are stacked along the thickness direction in which the dimension is the smallest, thereby reducing the overall thickness of the battery 1000.

For example, in some specific embodiments, when the battery 1000 is applied in the electrical device 2000, the second direction F2 extends in a vertical direction. The thickness direction of the battery cell 21 is equivalent to the vertical direction. In this case, the battery cell 21 is equivalent to being disposed in a flat lying manner, thereby occupying just a small vertical space, and reducing the overall height of the battery 1000.

In addition, the area of a surface perpendicular to the second direction F2 on the battery cell 21 is relatively large, and the maximum expansion force of the battery cell 21 is upward and downward in a case of expanding in volume. By reducing the number of battery layers 23 included in a battery row 20, the impact caused by the maximum expansion force of the battery cell 21 on the battery 1000 can be reduced, or the impact of the maximum expansion force of the battery cell 21 on the battery 1000 can even be ignored. For example, a battery row may include 2 battery layers 23.

In some embodiments, the dimension of the battery cell 21 along the third direction F3 is less than the dimension of the battery cell along the second direction F2, and the dimension of the battery cell along the second direction F2 is less than the dimension of the battery cell along the first direction F1. In other words, the battery layers 23 are stacked along the width direction of the battery cell 21, thereby also reducing the overall height of the battery 1000. In addition, the first surface 211 is a non-maximum surface. In other words, the electrical connection portion 22 is disposed on a relatively small side face of the battery cell 21, thereby alleviating the expansion and deformation in a position at which the electrical connection portion 22 is disposed, improving the stability of the electrical connection structure, and reducing the risk of sparking.

According to some embodiments of this application, as shown in FIG. 3 and FIG. 6, the battery cell 21 is further provided with a pressure relief portion 25. When the internal pressure of the battery cell 21 is excessively high (for example, in a case of thermal runaway), the pressure relief portion 25 is configured to release the internal substances (for example, gas, liquid, and particulate matters) of the battery cell 21 to reduce the internal pressure of the battery cell 21 and prevent the battery cell 21 from being pressurized much quickly inside. The quick pressurization may lead to danger and accidents such as explosion of the battery cell 21. For example, the pressure relief portion 25 may be an explosion-proof valve, a burst disc, or the like.

In addition, the pressure relief portion 25 and the electrical connection portion 22 are positioned on different sides of the battery cell 21. This favorably ensures that a relatively large distance exists between the electrical connection portion 22 and the pressure relief portion 25 of the battery cell 21, so as to effectively prevent the conductive particles and the like in the emissions from flowing to the electrical connection portion 22 of the battery cell and causing insulation failure, high-voltage sparking and other problems (the emissions are expelled by the battery cell 21 through its own pressure relief portion 25 in circumstances such as thermal runaway), and so as to ensure a sufficient creepage clearance between the conductive components in the battery 1000 and avoid the short-circuiting problem.

In some embodiments, as shown in FIG. 3 and FIG. 6, the battery cell 21 includes a second surface 212 spaced apart from the first surface 211 along the first direction F1. The pressure relief portion 25 is disposed on the second surface 212. In other words, the pressure relief portion 25 and the electrical connection portion 22 are positioned on two lateral surfaces of the battery cell 21 respectively, the lateral surfaces being oriented away from each other. In this way, the distance between the electrical connection portion 22 and the pressure relief portion 25 can be further increased, and the electrical connection portion 22 can be better protected against the impact of the emissions expelled by the pressure relief portion 25. The probability of being impacted is lower, and the safety and reliability of the battery 1000 in use are higher.

Moreover, in an embodiment in which two adjacent structural components 10 are both battery rows 20, as shown in FIG. 3 and FIG. 6, the first surfaces 211 of the two battery rows 20 are oriented opposite to each other, and the pressure relief portion 25 is disposed on one side of each of the two battery rows 20, where the one side of one battery row is oriented away from the one side of the other battery row. To be specific, of a battery cell 21 in each battery row 20, a surface oriented toward the other battery row 20 is a first surface 211, and a surface oriented away from the other battery row 20 is a second surface 212. In this case, the electrical connection portion 22 is disposed on the first surface 211, and the pressure relief portion 25 is disposed on the second surface 212.

In this way, the pressure relief portion 25 of each battery cell 21 in the same battery row 20 is prevented from erupting toward any electrical connection portion 22 in this battery row 20 and from erupting toward any electrical connection portion 22 in an adjacent battery row 20, thereby effectively protecting the electrical connection portion 22 of each battery cell 21 against the impact of the emissions expelled by other battery cells 21, and ensuring the safety and reliability of the battery 1000 in use.

In some other embodiments, the battery cell 21 includes a peripheral surface connected to the first surface 211. The pressure relief portion 25 is disposed on the peripheral surface. For example, the battery cell 21 includes a first surface 211 and a second surface 212 oriented away from each other, and the peripheral surface is a surface connected between the first surface 211 and the second surface 212.

Therefore, the electrical connection portion 22 and the pressure relief portion 25 are located on adjacent sides of the battery cell 21 respectively. In this way, a specified safety distance exists between the electrical connection portion 22 and the pressure relief portion 25, thereby reducing the impact caused to the electrical connection portion 22 by the emissions expelled by the pressure relief portion 25, and improving the safety and reliability of the battery 1000 in use.

According to a second aspect of this application, an embodiment of this application provides an electrical device. The electrical device 2000 includes the battery 1000 disclosed in an embodiment in the first aspect of this application. The battery 1000 is configured to provide electrical energy for the electrical device 2000. Therefore, by employing the battery 1000, the safety and reliability of the electrical device 2000 in use are improved.

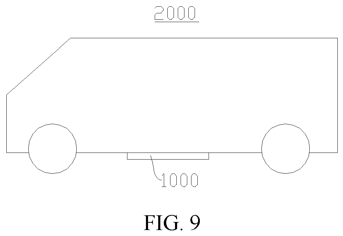

Optionally, as shown in FIG. 9, when the battery 1000 is applied to a vehicle, the battery 1000 may be disposed at the bottom, front, or rear of the vehicle. The battery 1000 may be configured to supply power to the vehicle. For example, the battery 1000 may serve as an operating power supply of the vehicle. The vehicle may further include a controller and a motor. The controller is configured to control the battery 1000 to supply power to the motor, for example, to meet electrical energy requirements in starting, navigating, or running the vehicle.

The following describes, with reference to drawings, a battery 1000 according to a specific embodiment of this application and a vehicle containing the battery.

As shown in FIG. 9, the battery 1000 is disposed at the bottom of the vehicle. As shown in FIG. 3 to FIG. 4, the battery 1000 includes a box and four structural components 10 disposed in the box and arranged along a first direction F1. The first direction F1 is a first horizontal direction. The two structural components 10 located in the middle are both battery rows 20. The two structural components 10 located at both ends are beams 30. The beam 30 is provided with a heat dissipation channel and water cooling channel.

Each battery row 20 includes two battery layers 23 arranged along a second direction F2. Each battery layer 23 includes three battery cells 21 arranged along a third direction F3. The length direction of each battery cell 21 extends along the third direction F3, the width direction of each battery cell extends along the first direction F1, and the height direction of each battery cell extends along the second direction F2. The second direction F2 is a vertical direction, and the third direction F3 is a third horizontal direction perpendicular to the first horizontal direction. In other words, each battery cell 21 is arranged in a flat lying manner to reduce the overall height of the battery 1000, thereby facilitating arrangement at the bottom of a vehicle.

Each battery cell 21 includes a housing 214 and an end cap 215 disposed at one end of the housing 214 in the first direction F1. The outer surface of the end cap 215 forms a first surface 211. The first surface 211 is provided with an electrical connection portion 22. The electrical connection portion 22 includes a first electrode post 221 and a second electrode post 222, that is, a positive electrode post and a negative electrode post, respectively. A pressure relief portion 25 is disposed on an end wall of the housing 214, the end wall being oriented opposite to the end cap 215. The pressure relief portion 25 is oriented opposite to the beam 30, so that the high-temperature gas expelled by the pressure relief portion 25 can be exhausted through the heat dissipation channel.

The first surfaces 211 of the two battery rows 20 are oriented opposite to each other. The first surfaces 211 of the two battery rows 20 are spaced part by a fixed clearance by a support piece 40. The support piece 40 is designed as insulative and includes a first support platform 41 and a second support platform 42. The first support platform 41 and the second support platform 42 are disposed on two opposite first surfaces 211 to form a boss respectively. The height of each support platform is greater than the height of the electrical connection portion 22 on the same first surface 211. The first support platform 41 and the second support platform 42 abut against each other and are fixed together by structural adhesive to play a supporting and constraining role, thereby greatly increasing the structural strength and stability of the battery 1000.

In addition, one support piece 40 is disposed at each of the four corners of each first surface 211. The first electrode post 221 and the second electrode post 222 are disposed in the middle of the first surface 211 and are spaced apart along the third direction F3. The six battery cells 21 of the same battery row 20 are connected in series by a busbar 24 and then output as a whole. Some busbars 24 extend in a direction tilting against the second direction F2 to connect two adjacent battery cells 21 of two battery layers 23. Some other busbars 24 extend along the third direction F3 to connect two adjacent battery cells 21 of the same battery layer 23.

By designing a support platform of specified mechanical strength on the surface of the battery cell 21, after a plurality of battery cells 21 are assembled to form a battery 1000, the support platform can increase the overall strength and stability of the battery 1000, especially in the height direction (that is, the first direction F 1) of the battery cell at which a supporting structure is lacking, thereby preventing deformation of the battery 1000 on the whole and changes in the position and distance of the internal battery cells 21, and avoiding safety risks.

It is hereby noted that to the extent that no conflict occurs, the embodiments of this application and the features in the embodiments may be combined with each other.

What is described above is merely exemplary embodiments of this application, but is not intended to limit this application. To a person skilled in the art, various modifications and variations may be made to this application. Any and all modifications, equivalent replacements, improvements, and the like made without departing from the spirit and principles of this application still fall within the protection scope of this application.

**Claims**

1. A battery, comprising:

   a plurality of structural components, wherein the plurality of structural components are arranged along a first direction, at least one structural component is a battery row, the battery row comprises at least one battery cell, the battery cell comprises a first surface, and the first surface is provided with an electrical connection portion and the first surface is oriented toward an adjacent structural component; and
   a support piece, wherein the support piece is disposed between the battery row and the adjacent structural component and is configured to space the first surface and the adjacent structural component apart by a fixed clearance.

2. The battery according to claim 1, wherein at least one structural component is a beam, the beam is arranged adjacent to the battery row, and the beam and the adjacent battery row are interspaced with the support piece.

3. The battery according to claim 2, wherein the beam is flanked with the battery rows on both sides along the first direction, and each battery row and the beam are interspaced with the support piece.

4. The battery according to claim 1, wherein at least two structural components are the battery rows arranged adjacent to each other, and the two adjacent battery rows are interspaced with the support piece.

5. The battery according to claim 4, wherein the battery cell further comprises a second surface spaced apart from the first surface along the first direction; and the first surfaces of the two adjacent battery rows are opposite to each other, or, the first surface of one of the battery rows is opposite to the second surface of an adjacent battery row.

6. The battery according to any one of claims 1 to 5, wherein the support piece comprises a first support platform and a second support platform, the first support platform is disposed on the first surface, the second support platform is disposed on the structural component adjacent to the first surface, and the first support platform abuts the second support platform.

7. The battery according to any one of claims 1 to 5, wherein the support piece comprises a support platform, and the support platform is disposed on one of the first surface or the adjacent structural component, and abuts the other of the first surface or the adjacent structural component.

8. The battery according to any one of claims 1 to 7, wherein the support piece comprises a filling adhesive applied between the battery row and the adjacent structural component.

9. The battery according to any one of claims 1 to 7, wherein the battery cell comprises a first end wall oriented toward the adjacent structural component, an outer surface of the first end wall forms the first surface, and the support piece is formed in one piece with the first end wall or the support piece is formed in one piece with the structural component.

10. The battery according to any one of claims 1 to 8, wherein the battery cell comprises a first end wall oriented toward the adjacent structural component, an outer surface of the first end wall forms the first surface, and the support piece is assembled to the first end wall or the support piece is assembled to the structural component.

11. The battery according to any one of claims 1 to 10, wherein the battery cell comprises a housing and an end cap disposed on the housing, and the support piece is disposed on the housing or the end cap.

12. The battery according to any one of claims 1 to 11, wherein a plurality of the support pieces are disposed on each first surface correspondingly, the plurality of the support pieces are disposed around the electrical connection portion, and two adjacent support pieces are spaced apart by a preset clearance.

13. The battery according to claim 12, wherein the first surface comprises four corners, and the support piece is disposed at each of the four corners.

14. The battery according to claim 12, wherein the battery further comprises a busbar; in a direction parallel to the first surface, the busbar is located between the two adjacent support pieces and connects the electrical connection portions of two adjacent battery cells.

15. The battery according to any one of claims 1 to 11, wherein the electrical connection portion comprises a first electrode post and a second electrode post, and the support piece is disposed between the first electrode post and the second electrode post.

16. The battery according to claim 15, wherein at least one end of the support piece extends to an edge of the first surface in a direction perpendicular to an arrangement direction of the first electrode post and the second electrode post.

17. The battery according to any one of claims 12 to 16, wherein the battery row comprises a plurality of battery layers stacked along a second direction, each battery layer comprises a plurality of battery cells arranged along a third direction, and the first direction, the second direction, and the third direction are perpendicular to each other; and
the battery further comprises a plurality of busbars, the battery cells of two adjacent battery layers are connected by a busbar extending along the second direction, and two adjacent battery cells of a same battery layer are connected by a busbar extending along the third direction.

18. The battery according to any one of claims 1 to 17, wherein, in the first direction, the first surfaces of two adjacent battery rows are opposite to each other, a distance between the two opposite first surfaces is $H_1$, and a height of the electrical connection portion is $H_2$, satisfying: $2H_2 + 3 \, \text{mm} \leq H_1$.

19. The battery according to any one of claims 1 to 18, wherein, in a direction parallel to the first surface, a distance between the support piece and the electrical connection portion is L, and a length of the first surface is M, satisfying: $5 \, \text{mm} \leq L \leq 2/3M$.

20. The battery according to any one of claims 1 to 19, wherein an area of the first surface is $S_1$, each first surface is connected to n support pieces, and a cross-sectional area of each support piece in a cross-section perpendicular to the first direction is $S_2$, satisfying:

$$\frac{S_1}{25} \leq nS_2 \leq \frac{4S_1}{5}.$$

21. The battery according to any one of claims 1 to 20, wherein a distance between the first surface and the adjacent structural component is $H_1$, an area of the first surface is $S_1$, each first surface is connected to n support pieces, a cross-sectional area of each support piece in a cross-section perpendicular to the first direction is $S_2$, and a length of the first surface is M, satisfying:

$$\frac{2H_1 \times S_1}{15M} \leq nS_2 \leq \frac{4S_1}{5}.$$

22. The battery according to any one of claims 1 to 21, wherein each first surface is connected to n support pieces, a maximum dimension of each support piece in a direction parallel to the first surface is D, a length of the first surface is M, and a width of the first surface is N, satisfying:

$$\frac{N}{20} \leq D \leq N \; ; \text{and/or} \; \frac{M}{40} \leq D \leq M.$$

23. The battery according to any one of claims 1 to 22, wherein the battery row comprises at least one battery layer stacked along a second direction, each battery layer comprises at least one battery cell arranged along a third direction, and the first direction, the second direction, and the third direction are perpendicular to each other; and

a dimension of the battery cell along the second direction is less than a dimension of the battery cell along the first direction and less than a dimension of the battery cell along the third direction; or
a dimension of the battery cell along the third direction is less than a dimension of the battery cell along the second direction, and the dimension of the battery cell along the second direction is less than a dimension of the battery cell along the first direction.

24. The battery according to any one of claims 1 to 23, wherein the battery cell is further provided with a pressure relief portion, and the pressure relief portion and the electrical connection portion are positioned on different sides of the battery cell.

25. The battery according to claim 24, wherein the battery cell comprises a second surface spaced apart from the first surface along the first direction, and the pressure relief portion is disposed on the second surface.

26. The battery according to claim 24, wherein the battery cell comprises a peripheral surface connected to the first surface, and the pressure relief portion is disposed on the peripheral surface.

27. An electrical device, wherein the electrical device comprises the battery according to any one of claims 1 to 26, and the battery is configured to provide electrical energy for the electrical device.

A

FIG. 1

B

FIG. 2

FIG. 3

FIG. 4

FIG. 5

FIG. 6

FIG. 7

FIG. 8

FIG. 9

## INTERNATIONAL SEARCH REPORT

| International application No. |
|---|
| **PCT/CN2023/120168** |

### A.    CLASSIFICATION OF SUBJECT MATTER

H01M50/244(2021.01)i;  H01M50/258(2021.01)i;  H01M50/236(2021.01)i;  H01M50/209(2021.01)i;  H01M50/289(2021.01)i;  H01M50/588(2021.01)i;  H01M50/59(2021.01)i;  H01M50/249(2021.01)i

According to International Patent Classification (IPC) or to both national classification and IPC

### B.    FIELDS SEARCHED

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

DWPI; CNTXT; ENTXTC; VCN; CNKI; ISI_Web of Science: 电池, 结构件, 电池排, 电池单体, 电连接, 支撑, 结构强度, 间隙, 稳定性, 寿命, battery, supporting piece

### C.    DOCUMENTS CONSIDERED TO BE RELEVANT

| Category* | Citation of document, with indication, where appropriate, of the relevant passages | Relevant to claim No. |
|---|---|---|
| Y | CN 215771409 U (JIAXING MODU NEW ENERGY CO., LTD. et al.) 08 February 2022 (2022-02-08) <br> description, paragraphs 7-9 and 23, and figure 1 | 1-27 |
| Y | CN 217158519 U (NINGDE CONTEMPORARY AMPEREX TECHNOLOGY CO., LTD.) 09 August 2022 (2022-08-09) <br> description, paragraphs 6-7 | 1-27 |
| Y | WO 2022142609 A1 (CONTEMPORARY AMPEREX TECHNOLOGY CO., LTD.) 07 July 2022 (2022-07-07) <br> claim 1 | 24-26 |
| A | WO 2022142609 A1 (CONTEMPORARY AMPEREX TECHNOLOGY CO., LTD.) 07 July 2022 (2022-07-07) <br> claim 1 | 1-23, 27 |
| PX | CN 218957903 U (NINGDE CONTEMPORARY AMPEREX TECHNOLOGY CO., LTD.) 02 May 2023 (2023-05-02) <br> claims 1-27 | 1-27 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 October 2023** | **25 October 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/120168**

### C.    DOCUMENTS CONSIDERED TO BE RELEVANT

| Category* | Citation of document, with indication, where appropriate, of the relevant passages | Relevant to claim No. |
|---|---|---|
| A | CN 216120530 U (NINGDE CONTEMPORARY AMPEREX TECHNOLOGY CO., LTD.) 22 March 2022 (2022-03-22) entire document | 1-27 |
| A | CN 216054941 U (NINGDE CONTEMPORARY AMPEREX TECHNOLOGY CO., LTD.) 15 March 2022 (2022-03-15) entire document | 1-27 |

**INTERNATIONAL SEARCH REPORT**
Information on patent family members

International application No.

**PCT/CN2023/120168**

| Patent document cited in search report | | | Publication date (day/month/year) | Patent family member(s) | | | Publication date (day/month/year) |
|---|---|---|---|---|---|---|---|
| CN | 215771409 | U | 08 February 2022 | None | | | |
| CN | 217158519 | U | 09 August 2022 | None | | | |
| WO | 2022142609 | A1 | 07 July 2022 | EP | 4235918 | A1 | 30 August 2023 |
| CN | 218957903 | U | 02 May 2023 | None | | | |
| CN | 216120530 | U | 22 March 2022 | None | | | |
| CN | 216054941 | U | 15 March 2022 | None | | | |

Form PCT/ISA/210 (patent family annex) (July 2022)

**REFERENCES CITED IN THE DESCRIPTION**

**Patent documents cited in the description**

- CN 202222622368